# EUROPEAN PATENT SPECIFICATION

(11) **EP 2 767 526 B1**
(45) Date of publication and mention of the grant of the patent: **29.04.2020**
(21) Application number: 12840022.3
(22) Date of filing: 11.10.2012
(51) Int. Cl.: C04B 35/66, C04B 35/10, C04B 35/18, C04B 35/185, C04B 35/565, F27D 1/16

(54) **REFRACTORY PROTECTIVE MATERIAL FOR CLINKER FURNACES, WHICH PREVENTS THERMOCHEMICAL ATTACK WITHOUT THE FORMATION OF ENCRUSTATION OR RINGS**
FEUERFESTES SCHUTZMATERIAL FÜR KLINKERÖFEN ZUR VERMEIDUNG VON THERMOCHEMISCHEN ANGRIFFEN OHNE BILDUNG VON VERKRUSTUNG ODER RINGEN
MATÉRIAU RÉFRACTAIRE DE PROTECTION POUR FOURS À CLINKER ÉVITANT L'ATTAQUE THERMOCHIMIQUE ET LA FORMATION DE CROÛTES OU D'ANNEAUX ÉVITANT L'ATTAQUE THERMOCHIMIQUE ET LA FORMATION DE CROÛTES OU D'ANNEAUX

(30) Priority: 14.10.2011 ES 201101133 P
(43) Date of publication of application: 20.08.2014
(73) Proprietor: Refractaria S.A., 33187 El Berrón-Siero (ES)
(72) Inventor: SUÁREZ ALVÁREZ, Carlos Omar, 33187 El Berrón-Siero (Asturias) (ES); PENAVÁZQUEZ, José Luis, 33187 El Berrón-Siero (Asturias) (ES)
(74) Representative: Carvajal y Urquijo, Isabel
(86) International application number: PCT/ES2012/000265
(87) International publication number: WO 2013/053962

(56) References cited:
- WO-A1-98/00373
- WO-A1-2004/071993
- DD-A1- 274 207
- GB-A- 983 567
- GB-A- 1 402 988
- DATABASE WPI Week 201264 Thomson Scientific, London, GB; AN 2012-M32451 XP002737115, -& CN 102 584 288 A (ZHENGZHOU ZHONGBEN FURNACE MATERIAL CO) 18 July 2012 (2012-07-18)
- DATABASE WPI Derwent Publications Ltd., London, GB; AN 2000-524937, XP055149610 & CN 1 255 463 A (SHEN Z) 07 June 2000
- DATABASE WPI Derwent Publications Ltd., London, GB; AN 2004-053904, XP055149612 & BR 0 300 289 A (DA SILVA FERREIRA) 25 November 2003
- DATABASE WPI Derwent Publications Ltd., London, GB; AN 1993-325955, XP055149615 & KR 93 0 000 839 B1 (POHANG IRON&STEEL) 06 February 1993

## Description

### Object of the Invention

The object of the present invention relates to a protective refractory material for clinker kilns which prevents thermochemical attack without the formation of coating or rings such that it withstands thermochemical attack in cement kilns, extended to the transition, safety and burning zones without the lining producing any type of coating, rings or build ups.

This new refractory material (refractory lining is fundamental in the performance of the rotary kiln as well as in the static parts of the clinker kiln since the durability of the refractory lining determines the durability of the kiln itself, which is a key factor in the economic performance of the cement industry) is applied in the inner linings of the cement kiln rotary part, in the lower transition zone, upper transition zone, safety zone and calcination zone which, due to their special physicochemical characteristics, require substantial protection against chemical attack occurring in the process, as well as a higher pyroscopic resistance that can withstand isolated temperature increases and liquid phase formation occurring due to the use of alternative fuels in the cement industry. The foregoing will be discussed in the description of the invention below.

### Background of the Invention

Rotary kilns are divided into six main zones, each of which is characterized by the type of refractory they require due to the temperatures reached and the reactions achieved therein. These zones include cooling zone, transition zone, burning zone, upper transition zone, safety zone and calcination zone. The lower transition zone, burning zone and upper transition zone are lined with basic refractories where the main component is MgO (magnesium oxide). These refractory linings form a coating with the clinker in liquid phase which serves as a protection, thereby providing greater durability than other refractories.

These conventional zones of a clinker rotary kiln are:
- Outlet zone (A) : it has a length 0.5 times the diameter of the kiln. The cooled clinker is in solid state and produces high abrasion.
- Lower transition zone (B): it has a length 1 time the diameter of the kiln, after the cooling zone. In this zone, clinker at 1450°C is cooled below 1250°C. This zone is lined with basic refractory materials such that a coating protecting the surfaces of the lining which still contain liquid phase is formed.
- Burning zone (C): it has a length 5 times the diameter of the kiln, after the lower transition zone. The clinker is always kept in liquid phase with temperatures between 1400-1450°C in order to carry out the necessary reactions for complete clinker formation. This zone is lined with basic refractory materials such that a coating protecting the surfaces of the lining is formed.
- Upper transition zone (D): it has a length 2 times the diameter of the kiln, after the burning zone. This is the zone prior to the liquid phase formation and it is lined with basic refractory so that the protective coating is formed in the case of isolated liquid phase formation.
- Safety zone (E): it has a length 2 times the diameter of the kiln, after the upper transition zone. Aluminous refractory material is used in this zone with temperatures comprised between 1000 to 1200°C.
- Calcination zone (F) : it extends from the end of the safety zone to the rotary kiln material inlet. Aluminous refractory material is used in this zone. The burning of materials coming from the preheater entering the rotary kiln above 900°C ends in this zone.

These zones are kept stable with the use of conventional fossil fuels in the cement industry, disruptions being rather unusual and cause of errors in the operations of the installation. In a continuous process such as the aforementioned, the stability of the zones directly influences process control and therefore the obtained product quality. However, in recent years the cement industry has begun to extensively use alternative fuels for burning in kilns. This technological change was spurred, among other reasons, by the need to achieve an economic performance through improved energy efficiency and by a clear commitment to environmental conservation and waste recovery. Alternative fuels are introduced either through the main burner of the rotary kiln or through the precalciner. The introduction of alternative fuels leads to significant fluctuations in the chemical and energy balances of the fuel. Despite the existence of systems for controlling the feeding of alternative fuels, their use may affect the desirable stable operating conditions to keep the process in each of the zones of the kiln under control. The instability of the temperatures and chemical reactions occurring in each zone is increasing not only due to the lack of homogeneity in each alternative fuel but also to the need for using several, very different types of alternative fuels, mainly due to availability issues. This instability causes frequent temperature increases in the lower transition zone, upper transition zone and safety zone causing a much more common existence of liquid phase in said zones. This leads to coating and uncoating cycles which directly reduce the durability of basic refractories used in the lower and upper transition zones, given that the clinker entrains the outer layers of the refractory which is in contact with it with each uncoating cycle. Then there is the risk of losing entire zones of refractory lining due to the mechanical stress caused by the passage of clinker and rotation on accumulations of coating in the uncoating phase. The mentioned factors generate stress which, combined with stress relief, can cause the loss of whole bricks in the lining, and taking into account that the loss of a single brick causes a lack of support in contiguous bricks, this would culminate in a failure that would entail the immediate emergency shutdown of the installation. Furthermore, the coating-uncoating phenomenon even further complicates process control given that it radically changes the results of the thermography performed in the kiln shell.

The application WO 98/00373 A1 discloses a castable and gunning composition especially useful for lining cement kilns. It contains 62wt% in total alumina aggregate in different particle sizes, 10wt% zircon sand, 5wt% SiC and 8wt% ball clay. This helps in preventing built-up and alkali infiltration at the environment created in the preheater area, with the aim of protecting the precalciner of the kilns. Temperatures in the preheater are low and there is no reactivity of the raw materials.

GB 1402988 A teaches about a refractory material made by zircon, silicon carbide and alumina, of a maximum particle size of 25 microns, that provides high thermal shock resistance.

CN 102584288 A discloses a refractory mix comprising inter alia in wt: 40-60% bauxite clinker (source of Al2O3), 10-15% fused corundun, 15-18% SiC, 6-10% refractory clay and 3-5% zircon.

Further, CN 102584288 A uses bauxite and "Sialon", i.e. silicon aluminium oxynitride. The resulting properties of the material are very particular.

Also in the same line teaches GB 983567 A. This document makes no reference to a cement rotary kiln, either, or about thermo-chemical resistance against the liquid phase of the clinker in a cement kiln. The problem intended to be solved by GB 983567 A is to help the high SiC refractories to keep their good thermal shock and abrasion properties for use in metal foundry kilns.

DD 274207 A discloses a refractory brick consisting of 62-90wt% of sintered mullite; 0-10wt% of clay, 2-10wt% of silicium carbide and 5-15wt% of zirconium silicate. The examples of DD 274207 A show that the taught refractory bricks are made at a pressure close to 50 Mpa.

### Description of the Invention

The refractory material of the present invention will withstand thermochemical attack existing in the lower transition zone, upper transition zone, safety zone and burning zone in the variables circumstances occurring with the use of alternative fuels without the formation of coating or rings on the refractory lining, as described below, and has been created to solve the aforementioned drawbacks.

The present invention describes the use of a refractory formed by minerals that are carefully selected to achieve the physicochemical characteristics necessary to withstand new cement kiln conditions. A variable composition of andalusite (Al2SiO5), sintered alumina, fused alumina (Al2O3), electrofused alumina-zirconia, silicon carbide (SiC), zirconium silicate (ZrSiO4), and a refractory clay as an auxiliary element in the forming process, give the new refractory both chemical and physical properties that better withstand the operating conditions in cement installations.

Andalusite is an aluminum silicate (neosilicate) containing between 58 and 60% of Al2O3. It has a high purity with low flux content, good thermal shock resistance, low porosity, low thermal conductivity, good refractoriness under load, good performance with respect to flow and excellent volumetric stability.

Sintered alumina is a synthetic pure α-alumina material that has been densified by rapid sintering above 1800°C with the aid of sintering agents. It has high volumetric stability at high temperature as well as excellent thermal shock resistance, high refractoriness, mechanical strength and abrasion, acid and alkali etching resistance, as well as resistance to other chemical agents.

Fused alumina or artificial corundum is also a pure α-alumina material that is very similar in many aspects to sintered alumina, although the manufacturing process is performed by fusion. It has excellent thermomechanical properties, high volumetric stability, refractoriness, chemical stability, mechanical strength and chemical etching and abrasion resistance.

Electrofused alumina-zirconia is a material which is produced by the solidification of an alumina and zirconium silicate mixture which has been fused in an electric kiln and cast in a mold in liquid state. The composition of Al2O3 and ZrO2 can vary, the different compositions of the material thus being obtained. It is a refractory material that is widely used as lining in the bedplate of glass furnaces. This suitably classified ground product can be used as the raw material of another refractory product, taking advantage of its excellent chemical etching resistance.

Silicon carbide is an artificial mineral manufactured from silica sand and petroleum coke in an electric kiln at temperatures close to 2200°C with the following reaction:

SiO2+ 3C → SiC + O2

This raw material is extremely hard and has high abrasion resistance. It withstands corrosion when in contact with molten slag and has a low thermal expansion coefficient with excellent thermal spalling or breakage resistance.

Zirconium silicate or zircon (ZrSiO4) is a naturally occurring mineral which is very hard, has a high specific gravity and high refractoriness. It in turn has high corrosion and chemical etching resistance.

Clays provide plastic characteristics to the refractory mixture object of the invention which are necessary for forming the refractory geometric shape.

Based on the foregoing, the refractory material used by the present invention shows a high chemical attack resistance, higher refractoriness than that of conventional refractories used in the zones of application of the cement kiln, lower thermal conductivity and optimal performance with respect to the formation of the types of deposition rings mentioned above.

These features mean that the material object of the invention allows longer cement rotary kiln operation times due to its higher durability, which entails very significant economic savings by minimizing installation shutdowns due to constriction in the passage of the clinker through the kiln and deterioration of the refractory lining by chemical attack. It also better preserves the metal kiln shell conditions, reducing deformations caused by overheating of the metal part or the presence of hot spots therein.

As a result of its high refractoriness combined with its other properties, the new invention is very suitable for zones of the cement kiln in which other refractories do not withstand well the actual attack and thermal conditions of the rotary kiln process due to the introduction of alternative fuels, for example in zones such as the precalciner, where very significant additions of these recycled fuels take place with a rise in local temperature that leads to a higher rate of reactions that are undesirable for the refractory lining.

The new invention defines a specific chemical composition characterized by the addition of percentages by weight of the minerals described above, which can be combined in different proportions.

### Description of the Drawings

To complement the description that is being made and for the purpose of aiding to better understand the features of the invention, a drawing is attached to the present specification as an integral part thereof in which the following has been depicted with an illustrative and non-limiting character:

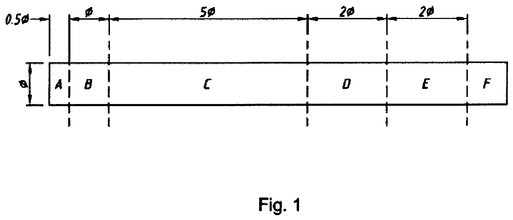

Figure 1 shows the different zones of the cement production rotary kiln.

### Preferred Embodiment of the Invention

The refractory material of the present invention has the following variable composition that is described in the following examples:
EXAMPLE 1
   - Andalusite (Al2SiO5), between 30 and 80%
   - Silicon carbide (SiC), between 5 and 60%
   - Zirconium silicate (ZrSiO4), between 5 and 60%
   - Clay, between 5 and 15%
EXAMPLE 2 (Comparative example)
   - Sintered mullite (3Al2O3.2SiO2), between 30 and 80%
   - Silicon carbide (SiC), between 5 and 60%
   - Zirconium silicate (ZrSiO4), between 5 and 60%
   - Clay, between 5 and 15%
EXAMPLE 3
   - Sintered alumina (Al2O3), between 30 and 80%
   - Silicon carbide (SiC), between 5 and 60%
   - Zirconium silicate (ZrSiO4), between 5 and 60%
   - Clay, between 5 and 15%
EXAMPLE 4
   - Fused alumina (Al2O3), between 30 and 80%
   - Silicon carbide (SiC), between 5 and 60%
   - Zirconium silicate (ZrSiO4), between 5 and 60%
   - Clay, between 5 and 15%
EXAMPLE 5
   - Electrofused alumina-zirconia, between 30 and 80%
   - Silicon carbide (SiC), between 5 and 60%
   - Zirconium silicate (ZrSiO4), between 5 and 60%
   - Clay, between 5 and 15%
EXAMPLE 6
   - Andalusite (Al2SiO5), between 30 and 80%
   - Zirconium silicate (ZrSiO4), between 5 and 60%
   - Clay, between 5 and 15%
EXAMPLE 7 (Comparative example)
   - Sintered mullite (3Al2O3.2SiO2), between 30 and 80%
   - Zirconium silicate (ZrSiO4), between 5 and 60%
   - Clay, between 5 and 15%
EXAMPLE 8
   - Sintered alumina (Al2O3), between 30 and 80%
   - Zirconium silicate (ZrSiO4), between 5 and 60%
   - Clay, between 5 and 15%
EXAMPLE 9
   - Fused alumina (Al2O3), between 30 and 80%
   - Zirconium silicate (ZrSiO4), between 5 and 60%
   - Clay, between 5 and 15%
EXAMPLE 10
   - Electrofused alumina-zirconia, between 30 and 80%
   - Zirconium silicate (ZrSiO4), between 5 and 60%
   - Clay, between 5 and 15%

The zones of application of the new invention are perfectly defined in the cement rotary kiln, both in the types with a grate cooler and with a satellite cooler (see Figure 1).
- Outlet zone (A)
- Lower transition zone (B)
- Burning zone (C)
- Upper transition zone (D)
- Safety zone (E)
- Calcination zone (F)

The refractory material object of the present invention, will be used in zones A, B, D, E and F.

## Claims

1. Use of a protective refractory material for clinker kilns, of the rotary kiln type used in the cement industry, which prevents thermochemical attack and the formation of coating or rings, in the outlet zone (A), the lower transition zone (B), the upper transition zone (D), the safety zone (E) and the calcination zone (F) of the clinker kiln, in which
said material is composed of the following minerals, defined as percentage by weight: andalusite or sintered alumina or fused alumina or electrofused alumina-zirconia of between 30 and 80%; silicon carbide of between 5 and 60%; zirconium silicate of between 5 and 60%; and clay of between 5 and 15%; the sum of percentages being 100%.

## Patentansprüche

1. Verwendung eines feuerfesten Schutzmaterials für Klinkeröfen vom Typ des in der Zementindustrie verwendeten Drehrohrofens zur Vermeidung thermochemischer Angriffe und der Bildung von Belägen oder Ringen im Austrittsbereich (A), im unteren Übergangsbereich (B), im oberen Übergangsbereich (D), im Sicherheitsbereich (E) und im Kalzinierbereich (F) des Klinkerofens, wobei
das genannte Material aus den folgenden, in Gewichtsanteilen angegebenen Mineralien zusammengesetzt ist: zwischen 30 und 80 % Andalusit oder gesintertes Aluminiumoxid oder geschmolzenes Aluminiumoxid oder elektrogeschmolzenes Aluminiumoxid-Zirkondioxid; zwischen 5 und 60 % Siliziumkarbid; zwischen 5 und 60 % Zirkoniumsilikat; und zwischen 5 und 15 % Ton; wobei die Summe der Prozentangaben 100 % beträgt.

## Revendications

1. Utilisation d'un matériau réfractaire de protection pour fours à clinker, du type de four rotatif utilisé dans l'industrie du ciment, évitant l'attaque thermochimique et la formation de croûtes ou d'anneaux, dans la zone de sortie (A), la zone de transition inférieure (B), la zone de transition supérieure (D), la zone de sécurité (E) et la zone de calcination (F) du four à clinker, dans lequel,
ledit matériau est composé des minéraux suivants, définis en pourcentage en poids : andalousite ou alumine frittée ou alumine fondue ou alumine - zircone électrofondue comprise entre 30 et 80% ; carbure de silicium compris entre 5 et 60% ; silicate de zirconium compris entre 5 et 60% ; et argile comprise entre 5 et 15% ; la somme des pourcentages étant de 100%.
